# EUROPEAN PATENT APPLICATION

(11) **EP 4 827 057 A1**
(43) Date of publication of application: **21.10.2026**
(21) Application number: 24914960.0
(22) Date of filing: 22.10.2024
(51) Int. Cl.: H04L 27/26

(54) **DATA TRANSMISSION METHOD, WIRELESS COMMUNICATION DEVICE, MEDIUM AND PRODUCT**

(30) Priority: 02.01.2024 CN 202410011221
(71) Applicant: ZTE CORPORATION, Shenzhen, Guangdong 518057 (CN)
(72) Inventor: XIN, Yu, Shenzhen, Guangdong 518057 (CN); BAO, Tong, Shenzhen, Guangdong 518057 (CN); HUA, Jian, Shenzhen, Guangdong 518057 (CN); WANG, Wei, Shenzhen, Guangdong 518057 (CN)
(74) Representative: Savi, Massimiliano
(86) International application number: PCT/CN2024/126379
(87) International publication number: WO 2025/145743

(57) **Abstract**

Embodiments of the present application provide a data transmission method, a wireless communication device, a medium and a product. Downlink control information comprising reference signal indication information indicates at least two different users, so that on the basis of the length of a first reference sequence represented by respective corresponding reference signal indication information, each user adds a respective first reference sequence at the tail of a respective first data sequence to obtain a respective corresponding second data sequence.

## Description

### CROSS-REFERENCE TO RELATED APPLICATION

The present application claims priority to Chinese Patent Application No. 202410011221.2, titled "Data Transmission Method, and Wireless Communication Device and Medium", filed January 2, 2024 before the China National Intellectual Property Administration, the entire contents of which are incorporated herein by reference.

### TECHNICAL FIELD

Embodiments of the present disclosure relate to the field of communication technology, and in particular, to a data transmission method, a wireless communication device, a medium and a product.

### BACKGROUND

Fifth Generation Mobile Communication Technology (5G) New Radio (NR) supports Cyclic Prefix Orthogonal Frequency Division Multiplexing (CP-OFDM) and Discrete Fourier Transform Spread Orthogonal Frequency Division Multiplexing (DFT-s-OFDM) waveforms.

In related technologies, users in identical cell use identical Cyclic Prefix (CP), but the CP occupies time-frequency resources, thereby reducing spectral efficiency. How to reduce CP overhead and improve spectral efficiency remains a technical problem to be addressed.

### SUMMARY

Embodiments of the present disclosure provide a data transmission method, a wireless communication device, a medium, and a product.

In a first aspect, embodiments of the present disclosure provide a data transmission method, which is applied to a first communication node and a second communication node. The method includes: receiving, by the first communication node and the second communication node, downlink control information including reference signal indication information, where the reference signal indication information is configured to represent a length of a first reference sequence corresponding to each of the first communication node and the second communication node; adding a first reference sequence, by the first communication node, to a tail of a first data sequence according to the reference signal indication information, to obtain a second data sequence; adding a first reference sequence, by the second communication node, to a tail of a first data sequence according to the reference signal indication information, to obtain a second data sequence; the length of the first reference sequence corresponding to the first communication node and the length of the first reference sequence corresponding to the second communication node being different; and transmitting first information, by the first communication node and the second communication node, respectively, where each piece of the first information is obtained according to the corresponding second data sequence.

In a second aspect, embodiments of the present disclosure provide a data transmission method. The method includes: transmitting downlink control information including reference signal indication information, where the reference signal indication information at least represents the lengths of first reference sequences corresponding to a first communication node and a second communication node respectively. The reference signal indication information is configured to enable the first communication node to add a first reference sequence to a tail of first data according to the corresponding reference signal indication information to obtain a second data sequence, and to enable the second communication node to add a first reference sequence to a tail of first data according to the corresponding reference signal indication information to obtain a second data sequence. The lengths of the first reference sequences respectively corresponding to the first communication node and the second communication node are different.

In a third aspect, embodiments of the present disclosure provide a data transmission method which is applied to a transmitting node. The method includes: transmitting, by the transmitting node, downlink control information including reference signal indication information, where the reference signal indication information at least represents lengths of the first reference sequences corresponding to a first communication node and a second communication node, respectively; receiving, by the transmitting node, first information respectively transmitted by the first communication node and the second communication node, where each piece of the first information is obtained based on the second data sequences corresponding to the first communication node and the second communication node, respectively. The second data sequence corresponding to the first communication node is obtained by the first communication node adding a first reference sequence to a tail of first data according to the corresponding reference signal indication information. The second data sequence corresponding to the second communication node is obtained by the second communication node adding a first reference sequence to a tail of first data according to the corresponding reference signal indication information. The lengths of the first reference sequences corresponding to the first communication node and the second communication node are different.

In a fourth aspect, embodiments of the present disclosure provide a wireless communication device, including: at least one processor; at least one memory configured to store at least one program; when the at least one program is executed by the at least one processor, the data transmission method according to any one of the first aspect, the second aspect, or the third aspect is implemented.

In a fifth aspect, embodiments of the present disclosure provide a computer-readable storage medium storing computer-executable instructions, and the computer-executable instructions are configured to execute the data transmission method according to any one of the first aspect, the second aspect, or the third aspect.

In a sixth aspect, embodiments of the present disclosure provide a computer program product, including a computer program or computer instructions. The computer program or the computer instructions are stored in a computer-readable storage medium. A processor of a computer device is configured to read the computer program or the computer instructions from the computer-readable storage medium, and execute the computer program or the computer instructions, causing the computer device to perform the data transmission method according to any one of the first aspect, the second aspect, or the third aspect.

### BRIEF DESCRIPTION OF THE DRAWINGS

FIG. 1 is a schematic diagram of a communication system provided by an embodiment of the present disclosure;
FIG. 2 is a schematic diagram of a communication system provided by another embodiment of the present disclosure;
FIG. 3 is a flowchart of a data transmission method provided by an embodiment of the present disclosure;
FIG. 4 is a schematic diagram illustrating two different users using first reference sequences of different lengths according to an example of the present disclosure;
FIG. 5 is a schematic diagram illustrating two different users using first reference sequences of different lengths according to another example of the present disclosure;
FIG. 6 is a schematic diagram illustrating two different users transmitting second data sequences of identical length according to an example of the present disclosure;
FIG. 7 is a schematic diagram illustrating two different users transmitting first data sequences of different lengths according to an example of the present disclosure;
FIG. 8 is a schematic diagram illustrating two different users using second reference sequences of identical length according to an example of the present disclosure;
FIG. 9 is a schematic diagram illustrating two different users using second reference sequences of identical length according to another example of the present disclosure;
FIG. 10 is a schematic flow diagram illustrating waveform modulation of a second data sequence according to an example of the present disclosure;
FIG. 11 is a schematic diagram illustrating DFT of a second data sequence according to an example of the present disclosure;
FIG. 12 is a flowchart of a data transmission method according to another embodiment of the present disclosure;
FIG. 13 is a schematic diagram illustrating two different users transmitting first data sequences of different lengths which keeping orthogonal to each other according to an example of the present disclosure;
FIG. 14 is a schematic diagram illustrating two different users transmitting first data sequences of different lengths which keeping orthogonal to each other according to another example of the present disclosure;
FIG. 15 is a schematic structural diagram of a wireless communication device according to an embodiment of the present disclosure.

### DETAILED DESCRIPTION

To make the objectives, technical schemes, and advantages of the present disclosure clearer, the following further describes the present disclosure in detail with reference to the accompanying drawings and embodiments. It should be understood that the specific embodiments described herein are merely for explaining the present disclosure and are not intended to limit the present disclosure.

It should be noted that, although functional modules are depicted in the device schematic diagrams and a logical sequence is shown in the flowcharts, in some cases, the illustrated or described steps may be executed in an order different from the module divisions in the devices or the sequence in the flowcharts. In the specification and claims as well as the above-mentioned accompanying drawings, terms such as "first" and "second" are used to distinguish similar objects and are not necessarily intended to describe a specific order or sequence.

In the description of the embodiments of the present disclosure, unless explicitly limited otherwise, terms such as "configure," "install," and "connect" should be interpreted broadly. Those having ordinary skill in the art can reasonably determine the specific meanings of the above terms in the embodiments of the present disclosure based on the specific content of the technical solutions.

The technical solutions of the embodiments of the present disclosure may be applied to various communication systems, for example: Wideband Code Division Multiple Access (WCDMA) mobile communication systems, Evolved Universal Terrestrial Radio Access Network (EUTRAN) systems, Next Generation Radio Access Network (NG RAN) systems, Long Term Evolution (LTE) systems, Worldwide Interoperability For Microwave Access (WiMAX) communication systems, 5th Generation (5G) systems, such as New Radio Access Technology (NR), and future communication systems, such as 6G systems.

The technical solutions of the embodiments of the present disclosure may be applied to various communication technologies, such as microwave communication, optical communication, millimeter-wave communication, and the like. The embodiments of the present disclosure do not limit the specific technologies or specific device forms adopted.

In related technologies, the Fifth Generation Mobile Communication Technology (5G) New Radio (NR) supports both Cyclic Prefix Orthogonal Frequency Division Multiplexing (CP-OFDM) and Discrete Fourier Transform Spread Orthogonal Frequency Division Multiplexing (DFT-s-OFDM) waveforms.

In related technologies, users in identical cell use identical Cyclic Prefix (CP). During data transmission, when the receiving end receives a data sequence including the CP, it is typically configured to directly discard the CP to counteract interference from multipath transmission. However, since the CP occupies time-frequency resources, this results in resource wastage and reduces spectral efficiency. How to reduce CP overhead and improve spectral efficiency remains a technical problem to be addressed.

In an embodiment, in CP-OFDM technology, the CP for different users is identical, meaning the CP length is fixed. Consequently, the amount of data that different users can transmit is also limited, preventing the users from transmitting an appropriate data volume based on the respective channel conditions of the users. How to enable each user to transmit an appropriate data volume according to the respective channel condition, thereby better improving spectral efficiency, is also a current issue that urgently requires discussion and resolution.

Based on this, embodiments of the present disclosure provide a data transmission method, a wireless communication device, a medium, and a product. By using downlink control information including reference signal indication information to indicate at least two different users, each user adds, according to a length of a corresponding first reference sequence represented by the corresponding reference signal indication information, a suitable first reference sequence to a tail of the first data sequence to obtain a corresponding second data sequence. Furthermore, the lengths of the first reference sequences added by the two different users to the respective first data sequences are different. Each user performs data transmission using the second data sequence configured in the aforementioned manner. Thus, each of different users can select a first reference sequence with a length suitable for the respective channel's multipath conditions. This enables the use of first data sequences of different lengths to improve spectral efficiency. In an embodiment, when the multipath delay of a certain user decreases, a shorter first reference sequence can be selected. This allows for the use of a longer first data sequence, enabling the transmission of more data, thereby improving spectral efficiency.

The first reference sequence configured in the embodiments of the present disclosure is a sequence known to the user. By using the first reference sequence to replace the Cyclic Prefix (CP), it serves identical function as the CP. In addition, since the first reference sequence is known information to the receiving end, the receiving end can use the received first reference sequence for phase noise tracking compensation, frequency offset estimation, etc. This effectively utilizes the resources occupied for data transmission, further improving resource utilization efficiency and enhancing data transmission efficiency.

The data transmission method, wireless communication device, medium, and product provided by embodiments of the present disclosure also configure second data sequences of identical length for different users and generate first information based on the second data sequences for data transmission. When different users employ first reference sequences of varying lengths, the lengths of the second data sequences for different users are still configured to be identical. This ensures synchronized alignment of uplink data from different users, thereby achieving that the uplink data from two users is orthogonal. In an embodiment, the second data sequences of different users having identical length ensures that the Fourier transform time windows for different users are identical, which in turn achieves that the uplink data from two users is orthogonal. This reduces the complexity of the Fourier transform and improves data processing efficiency.

The embodiments of the present disclosure are further described below with the accompanying drawings.

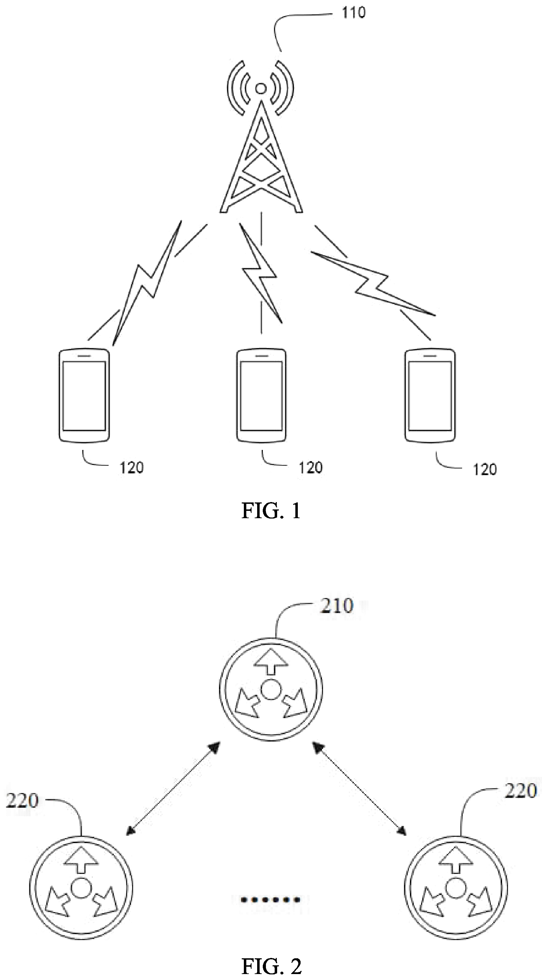

FIG. 1 is a schematic diagram of a communication system provided by an embodiment of the present disclosure. As shown in FIG. 1 according to an embodiment, the communication system includes a base station 110 and a plurality of terminals 120. The base station 110 communicates with each of the plurality of terminals 120 respectively.

It can be understood that the number of devices in the communication system of this embodiment and the communication relationships between devices may be extended and varied according to actual requirements, and are not specifically limited herein.

The base station 110 in the embodiments of the present disclosure may be an evolved NodeB (eNB), a Transmission Reception Point (TRP), a Next Generation NodeB (gNB) in an NR system, a base station in other future mobile communication systems, or an access node in a Wireless Fidelity (WiFi) system, among others. The embodiments of the present disclosure do not limit the specific technology and the specific device form adopted by the network device.

The terminal 120 in the embodiments of the present disclosure is an entity on the user side used for receiving or transmitting signals, such as a mobile phone. A terminal device may also be referred to as a terminal, User Equipment (UE), a Mobile Station (MS), a Mobile Terminal (MT), and the like. The terminal device may be a vehicle with communication capabilities, a smart vehicle, a mobile phone, a wearable device, a tablet (Pad), a computer with wireless transceiver functions, a Virtual Reality (VR) device, an Augmented Reality (AR) device, a communication device in Industrial Control, a communication device in Self-driving, a communication device in Remote Medical Surgery, a communication device in a Smart Grid, a communication device in Transportation Safety, a communication device in a Smart City, a communication device in a Smart Home, and so on. The embodiments of the present disclosure do not limit the specific technology and the specific device form adopted by the device.

The following example illustrates the application of the data transmission method in the embodiments of the present disclosure in the communication system shown in FIG. 1.

Taking two terminals 120 as an example, the base station 110 transmits downlink control information to the two terminals 120. The downlink control information includes two pieces of reference indication information, which respectively indicate the lengths of the first reference sequences for the two terminals 120, and the lengths of the first reference sequences corresponding to the two terminals 120 are different.

Each of the two terminals 120 configures a data sequence according to the length of the corresponding first reference sequence indicated by the corresponding reference indication information. Each of the two terminals 120 adds the corresponding first reference sequence to a tail of the corresponding first data sequences to be transmitted, so as to obtain a corresponding second data sequence. The lengths of the second data sequences of the two terminals 120 are identical. Each of the two terminals 120 obtains corresponding first information through the corresponding second data sequence, and transmit the first information.

In an embodiment, after the base station 110 instructs the two terminals 120 through the downlink control information to configure the second data sequences according to the lengths of the respective first reference sequences, when the base station 120 transmits the downlink information to the two terminals 120, the base station 120 will also configure the second data sequences accordingly, and generate the downlink information based on the corresponding second data sequences for transmission.

In this example, one piece of downlink control information may correspond to one piece of reference indication information. In this case, the base station 110 generates two pieces of downlink control information and transmits the two pieces of downlink control information to the two terminals 120 respectively, where the two pieces of downlink control information respectively include reference signal indication information corresponding to the terminals 120. Alternatively, one piece of downlink control information may correspond to a plurality of pieces of reference indication information. In this case, the base station 110 generates one piece of downlink control information and transmits it to the two terminals 120, where the one piece of downlink control information includes two pieces of reference signal indication information corresponding to the two terminals 120 respectively.

In another example, the terminal 120 performs Fourier transform (Discrete Fourier Transform, DFT) on the second data sequence to obtain an intermediate data sequence, then performs oversampled inverse Fourier transform (Inverse Discrete Fourier Transform, IDFT) on the intermediate data sequence to obtain a third data sequence, and finally transmits the third data sequence.

In another example, the downlink control information is control information transmitted through downlink radio resource control signaling.

In an embodiment, the differences among the first reference signals, the similarities or differences among the first data sequences, and the similarities among the second data sequences as described in the above examples will be described in other embodiments provided by the present disclosure, and thus will not be repeated here.

Through the data transmission method of the present disclosure, each of the two different terminals 120 in this example can select a first reference sequence with suitable length according to the multipath condition of a corresponding channel, thereby enabling the use of first data sequences of different lengths to improve spectral efficiency. Moreover, the two different terminals 120 in this example also configure second data sequences of identical length, thereby ensuring that the uplink data of different terminals 120 are synchronized and aligned, and further ensuring that the uplink data of the two users are orthogonal. In an embodiment, since the second data sequences of different terminals 120 have identical length, it can be ensured that the time windows for the Fourier transform of different terminals 120 are identical, which in turn achieves that the uplink data of the two users are orthogonal, thereby reducing the complexity of the Fourier transform and improving data processing efficiency.

FIG. 2 is a schematic diagram of a communication system according to another embodiment of the present disclosure. As shown in FIG. 2 according to an embodiment, the communication system includes an uplink communication node 210 and at least two communication nodes 220. The uplink communication node is communicatively connected to each communication node 220 respectively.

The number of devices and the communication relationships among devices in the communication system of this embodiment can be expanded and varied according to actual requirements, and are not specifically limited herein.

The uplink communication node 210 in the embodiments of the present disclosure may be a base station similar to the base station 110 in the above-mentioned embodiments, or may be an intermediate device, such as a switch, a router, a wireless access point, a communication server, a routing device, or the like.

The communication node 220 in the embodiments of the present disclosure may be a terminal device similar to the terminal 120 in the above-mentioned embodiments, or may be an intermediate device, such as a switch, a router, a wireless access point, a communication server, a routing device, or the like.

The following example illustrates the application of the data transmission method in the embodiments of the present disclosure in the communication system shown in FIG. 2.

Taking two communication nodes 220 as an example, the two communication nodes include a first communication node and a second communication node. The uplink communication node 210 transmits downlink control information to the first communication node and the second communication node. The downlink control information includes two pieces of reference indication information, which respectively indicate the lengths of the first reference sequences corresponding to the first communication node and the second communication node, and the lengths of the first reference sequences corresponding to the first communication node and the second communication node are different.

The first communication node and the second communication node respectively configure data sequences according to the lengths of the first reference sequences indicated by the reference indication information. The first communication node and the second communication node respectively add corresponding first reference sequences to tails of respective first data sequences to be transmitted, thereby obtaining respective second data sequences. The second data sequences of the first communication node and the second communication node have identical length. The first communication node and the second communication node respectively obtain first information through corresponding second data sequences and transmit the first information.

In an embodiment, after the uplink communication node 210 instructs, through downlink control information, that the first communication node and the second communication node configure the respective second data sequences according to the lengths of the corresponding first reference sequences, when the uplink communication node 210 transmits downlink information to the first communication node and the second communication node, the uplink communication node 210 also configures the second data sequences accordingly, and obtains and transmits the downlink information based on the corresponding second data sequences.

In this example, one piece of downlink control information may correspond to one piece of reference indication information. In this case, the uplink communication node 210 generates two pieces of downlink control information and transmits the two pieces of downlink control information to the first communication node and the second communication node respectively, where the two pieces of downlink control information respectively include the reference signal indication information corresponding to the first communication node and the second communication node. Alternatively, one piece of downlink control information may correspond to a plurality of pieces of reference indication information. In this case, the uplink communication node 210 generates one piece of downlink control information and transmits it to the first communication node and the second communication node, where the one piece of downlink control information message includes two pieces of reference signal indication information respectively corresponding to the first communication node and the second communication node.

In another example, the communication node 220 performs DFT on the second data sequence to obtain an intermediate data sequence, then performs oversampling IDFT on the intermediate data sequence to obtain a third data sequence, and finally transmits the third data sequence.

In another example, the downlink control information is control information transmitted through downlink radio resource control signaling.

It is to be understood that the differences among the first reference signals, the similarities or differences among the first data sequences, and the similarities among the second data sequences in the aforementioned examples will be described in other embodiments provided by the present disclosure, and thus will not be repeated here.

Through the data transmission method of the present disclosure, each of the two different communication nodes 220 in this example can select a first reference sequence with a length suitable for the respective channel' s multipath condition, thereby enabling the use of first data sequences of different lengths to improve spectral efficiency. Furthermore, the two different communication nodes 220 in this example also configure second data sequences of identical length, thereby ensuring that the uplink data of different communication nodes 220 are synchronized and aligned, and consequently ensuring that the uplink data of the two users are orthogonal. In an embodiment, since the lengths of the second data sequences of different communication nodes 220 are identical, it can be ensured that the time windows for the Fourier transform of different communication nodes 220 are identical, which also achieves that the uplink data of the two users are orthogonal, thereby reducing the complexity of the Fourier transform and improving data processing efficiency.

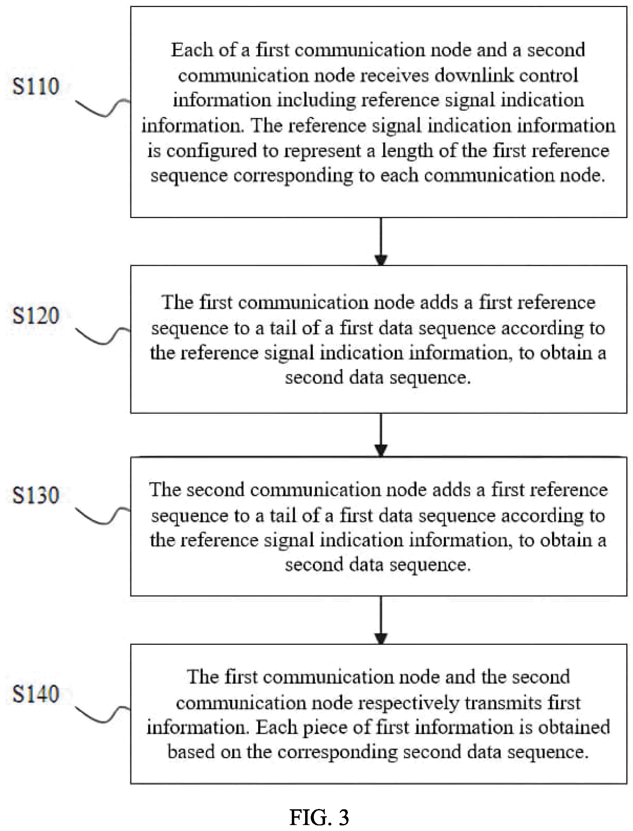

FIG. 3 is a flowchart of a data transmission method provided by an embodiment of the present disclosure. As shown in FIG. 3, the data transmission method may be applied to, but is not limited to, a first user node and a second communication node, or at least two terminals 120 as shown in FIG. 1, or at least two communication nodes 220 as shown in FIG. 2. In the embodiment of FIG. 3, the data transmission method may include, but is not limited to, Step S110, Step S120, Step S130, and Step S140.

At Step S110, a first communication node and a second communication node receives downlink control information including reference signal indication information. The reference signal indication information is configured to represent a length of the first reference sequence corresponding to each communication node.

At Step S120, the first communication node adds a first reference sequence to a tail of a first data sequence according to the reference signal indication information, to obtain a second data sequence.

At Step S130, the second communication node adds a first reference sequence to a tail of a first data sequence according to the reference signal indication information, to obtain a second data sequence.

Here, the length of the first reference sequence corresponding to the first communication node and the length of the first reference sequence corresponding to the second communication node are different.

At Step S140, the first communication node and the second communication node respectively transmits first information. Each piece of first information is obtained based on the corresponding second data sequence.

Here, in step S110, the first communication node is the communication node in the data transmission process corresponding to a first user, which may be a downlink communication device or a terminal device. The second communication node is the communication node in the data transmission process corresponding to a second user. In an embodiment, the data transmission method of the present disclosure may be applied to a plurality of users, among which at least two users have different lengths of the corresponding first reference sequences, referred to as the first user and the second user respectively. Correspondingly, the communication node corresponding to the first user is the first communication node, and the communication node corresponding to the second user is the second communication node.

Downlink control information refers to information transmitted by an uplink communication node or a base station to the first communication node and the second communication node, and is used to indicate the length of the first reference sequence corresponding to each of the first communication node and the second communication node.

Reference signal indication information refers to information generated by the uplink communication node based on the channel conditions of each user to indicate the length of the first reference sequence suitable for each user. In an embodiment, the uplink communication node may obtain a channel condition of each user through a report from the user, or may obtain the channel conditions of each user by means of detection, which is not specifically limited herein.

Here, in steps S120 and S130, the first data sequence refers to the data originally to be transmitted by the user, and the second data sequence refers to the data after adding the first reference sequence to the tail of the first data sequence. Adding the first reference sequence to the tail of the first data sequence means that the first reference sequence is added after the first data sequence. The first reference sequence refers to a reference signal sequence. In an embodiment, it may be a ZC sequence (Zadoff-Chu, ZC), a Golay sequence, a π/2 BPSK sequence, or the like. Here, BPSK refers to Binary Phase Shift Keying. Since the first reference sequence is known information to the receiving end, the receiving end can utilize the first reference sequence for operations such as phase noise tracking compensation and frequency offset estimation, thereby improving the utilization of transmitted data and avoiding the waste of spectrum resources.

The first reference sequence can also serve as a Cyclic Prefix (CP). In an embodiment, for cases that users have first reference sequences of different lengths, the common portion of each first reference sequence is taken as the cyclic prefix. Typically, the shortest-length first reference sequence serves as the common portion of all first reference sequences.

In step S140, the first information refers to the information used by each communication node for transmission after performing data modulation on the second data sequence.

The data transmission method of the above embodiment of the present disclosure, through the downlink control information including reference signal indication information, indicates at least two different users, namely the first communication node and the second communication node, to add a first reference sequence suitable for the respective users to the tail of the respective first data sequence according to the length of the first reference sequence indicated by the corresponding reference signal indication information, thereby obtaining the corresponding second data sequence. Moreover, the lengths of the first reference sequences added by the two different users to the tails of the respective first data sequences are different. Each user performs data transmission using the second data sequence configured in the aforementioned manner. Thus, each of different users can select a first reference sequence with a length suitable for the respective channel's multipath conditions. This enables the use of first data sequences of different lengths to improve spectral efficiency. In an embodiment, when the multipath delay of a certain user decreases, a shorter first reference sequence can be selected. This allows for the use of a longer first data sequence, enabling the transmission of more data, thereby improving spectral efficiency.

In addition, the first reference sequence configured in the embodiments of the present disclosure is a sequence known to the user. By replacing the Cyclic Prefix (CP) with the first reference sequence, the first reference sequence serves identical function as the CP. Moreover, since the first reference sequence is known information to the receiving end, the receiving end can utilize the received first reference sequence for phase noise tracking compensation, frequency offset estimation, and other operations. This effectively utilizes the data transmitted over occupied resources, further improving resource utilization efficiency and enhancing data transmission efficiency.

In an embodiment, the difference in length between the first reference sequence corresponding to the first communication node and the first reference sequence corresponding to the second communication node includes at least one of the following: the time lengths occupied in the time domain by the respective first reference sequences of the first communication node and the second communication node are different; the time domain resources occupied by the respective first reference sequences of the first communication node and the second communication node are different; the numbers of data included in the respective first reference sequences of the first communication node and the second communication node are different; the ratio of the number of data in the first reference sequence corresponding to the first communication node to the number of data in the second data sequence corresponding to the first communication node is different from the ratio of the number of data in the first reference sequence corresponding to the second communication node to the number of data in the second data sequence corresponding to the second communication node.

Here, the first communication node and the second communication node correspond to two different users, respectively. That is, the lengths of the first reference sequences of the two different users are different, including at least one of the following: the different lengths of the first reference sequences of the two different users refer to different time lengths occupied in the time domain, i.e., different occupied time domain resources; the different lengths of the first reference sequences of the two different users refer to different ratios of the number of data included in the first reference sequence to the number of data included in the corresponding second data sequence; the different lengths of the first reference sequences of the two different users refer to different numbers of data included in the two first reference sequences; when the frequency domain bandwidth resources allocated to the two users are identical, the numbers of data included in the first reference sequences of the two different users are different.

Through the reference signal indication information, different users are instructed to configure first reference sequences of different lengths, thereby enabling each of different users to select a first reference sequence with a length suitable for the respective channel's multipath conditions. This allows the use of first data sequences of different lengths to improve spectral efficiency. In an embodiment, when the multipath delay of a certain user decreases, a shorter first reference sequence can be selected. This allows for the use of a longer first data sequence, enabling the transmission of more data, thereby improving spectral efficiency. In addition, the first reference sequence configured in the embodiments of the present disclosure is a sequence known to the user. By replacing the Cyclic Prefix (CP) with the first reference sequence, the first reference sequence serves identical function as the CP. Moreover, since the first reference sequence is known information to the receiving end, the receiving end can utilize the received first reference sequence for phase noise tracking compensation, frequency offset estimation, and other operations. This effectively utilizes the data transmitted over occupied resources, further improving resource utilization efficiency and enhancing data transmission efficiency.

It can be understood that, this embodiment describes the scenario that the lengths of the first reference sequences of two different users are different under various conditions from the perspective of different data configurations. In scenarios involving more than two different users, it may be that at least two different users satisfy the condition of having different first reference sequence lengths as described above, or it may be that every pair of different users satisfies the condition of having different first reference sequence lengths as described above.

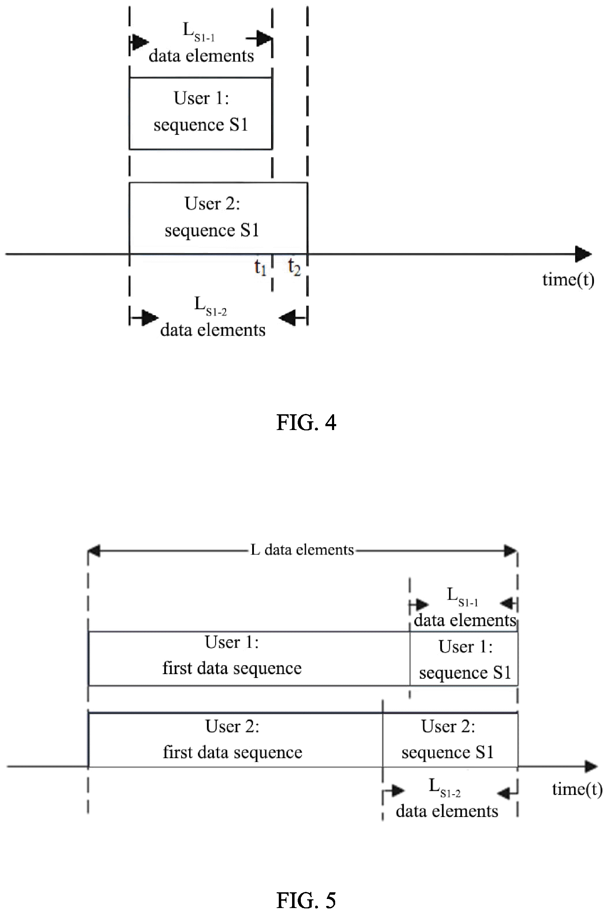

In an embodiment, FIG. 4 is a schematic diagram illustrating two different users using first reference sequences of different lengths according to an example provided in the present disclosure. As shown in FIG. 4, in this example, two different users use first reference sequences S1 of different lengths, specifically: User 1 uses a first reference sequence S1 with a length of L_{S1-1}, and User 2 uses a first reference sequence S1 with a length of L_{S1-2}.

The first reference sequence S1 with a length of L_{S1-1} used by User 1 and the first reference sequence S1 with a length of L_{S1-2} used by User 2 occupy different time lengths in the time domain. As shown in FIG. 4, the first reference sequence S1 with a length of L_{S1-1} used by User 1 occupies a time length of t₁ in the time domain, and the first reference sequence S1 with a length of L_{S1-2} used by User 2 occupies a time length of t₂ in the time domain.

The first reference sequence S1 with a length of L_{S1-1} used by User 1 and the first reference sequence S1 with a length of L_{S1-2} used by User 2 include different numbers of data elements. As shown in FIG. 4, the first reference sequence S1 with a length of L_{S1-1} used by User 1 includes a L_{S1-1} data elements, and the first reference sequence S1 with a length of L_{S1-2} used by User 2 includes L_{S1-2} data elements.

In an embodiment, FIG. 5 is a schematic diagram illustrating two different users using first reference sequences of different lengths according to another example provided in the present disclosure. As shown in FIG. 5, two different users transmit first data sequences of different lengths and use first reference sequences S1 of different lengths, specifically: User 1 inserts a first reference sequence S1 with a length of L_{S1-1} after the transmitted first data sequence to form the second data sequence transmitted by User 1; the first reference sequence S1 with a length of L_{S1-1} used by User 1 includes L_{S1-1} data elements, and the second data sequence transmitted by User 1 includes L data elements; User 2 inserts a first reference sequence S1 with a length of L_{S1-2} after the transmitted first data sequence to form the second data sequence transmitted by User 2; the first reference sequence S1 with a length of L_{S1-2} used by User 2 includes L_{S1-2} data elements, and the second data sequence transmitted by User 2 includes L data elements; the ratio of the number of data elements included in the first reference sequence S1 used by User 1 to the number of data elements in the second data sequence transmitted by User 1, L_{S1-1}/L, is different from the ratio of the number of data elements included in the first reference sequence S1 used by User 2 to the number of data elements in the second data sequence transmitted by User 2, L_{S1-2}/L, i.e., L_{S1-1}/L ≠ L_{S1-2}/L.

In an embodiment, the lengths of the second data sequences corresponding to the first communication node and the second communication node are identical. Here, the first communication node corresponds to the first user, and the second communication node corresponds to the second user, meaning the lengths of the second data sequences of the first user and the second user are identical.

In another embodiment, when a cell includes two or more different users, i.e., two or more different communication nodes, the lengths of the second data sequences of each different user are identical.

By configuring second data sequences of identical length for different users and obtaining first information based on the second data sequences for data transmission, even when different users use first reference sequences of different lengths, the lengths of the second data sequences for different users remain identical. This ensures that the uplink data of different users is synchronized and aligned, thereby achieving orthogonality between the uplink data of two users. In an embodiment, the second data sequences of different users having identical length ensures that the Fourier transform time windows for different users are identical, which in turn achieves that the uplink data from two users is orthogonal. This reduces the complexity of the Fourier transform and improves data processing efficiency.

In an embodiment, identical length of the second data sequences corresponding to the first communication node and the second communication node includes at least one of the following: the time lengths occupied by the second data sequences corresponding to the first communication node and the second communication node in the time domain are identical; the time domain resources occupied by the second data sequences corresponding to the first communication node and the second communication node are identical; the numbers of data included in the second data sequences corresponding to the first communication node and the second communication node are identical; the ratio of the number of data elements in the second data sequence corresponding to the first communication node to the number of subcarriers in the frequency domain resource corresponding to the first communication node is identical as the ratio of the number of data elements in the second data sequence corresponding to the second communication node to the number of subcarriers in the frequency domain resource corresponding to the second communication node.

Here, the first communication node and the second communication node correspond to two different users respectively. The identical length of the second data sequences of the two different users includes at least one of the following: identical length of the second data sequences of the two different users means that the two second data sequences occupy identical time length in the time domain, i.e., they occupy identical time domain resources; identical length of the second data sequences of the two different users means that the two second data sequences include identical number of data elements; when the frequency domain bandwidth resources allocated to the two users are identical, the two second data sequences of the different users include identical number of data elements; assuming the numbers of subcarriers included in the frequency domain resources allocated to the two users are K1 and K2, and the numbers of data elements included in the two second data sequences are L1 and L2, then L1/K1 equals L2/K2.

When two different users use first reference sequences of different lengths, it is still ensured that the lengths of the second data sequences corresponding to each of the two users are identical. This ensures that the uplink data of the two users is synchronized and aligned, meaning orthogonality between the uplink data of the two users can be achieved. Having identical length for the second data sequences of two different users allows for convenient setting of identical time window for the Fourier transform for both users, thereby achieving orthogonality between the uplink data of the two users.

It is understandable that this embodiment describes, from the perspective of different data configurations, identical length of the second data sequences for two different users under various circumstances. In a scenario involving more than two different users, at least two of the different users may satisfy the condition of having identical length for the second data sequences as described above, or every pair of different users may satisfy the condition of having identical length for the second data sequences.

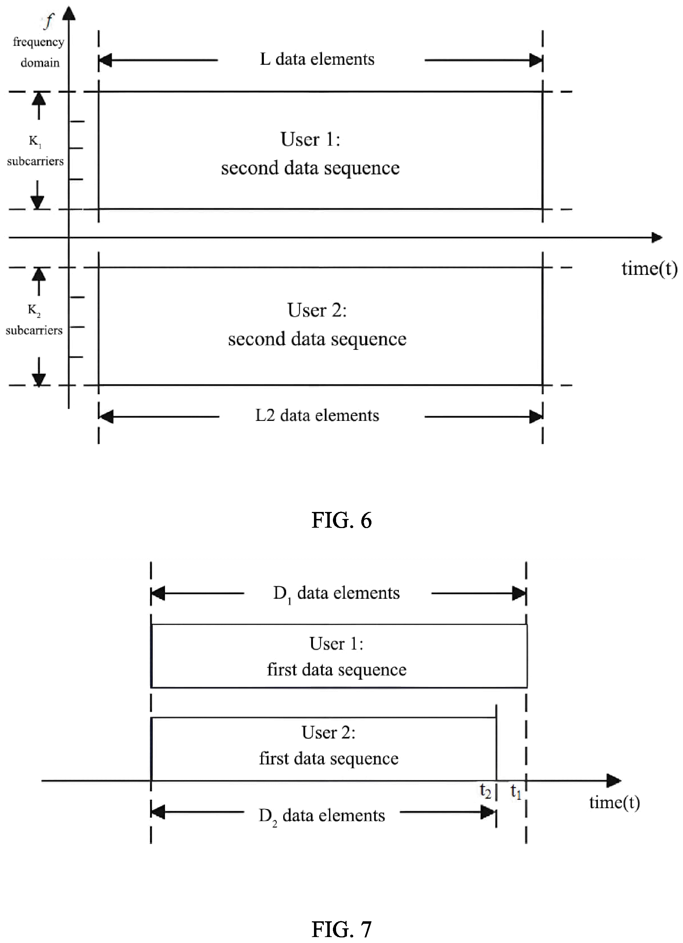

In an embodiment, FIG. 6 is a schematic diagram illustrating two different users transmitting second data sequences of identical length according to an example of the present disclosure. As shown in FIG. 6, assume there are two different users, namely User 1 and User 2. User 1 is allocated frequency domain resources of K1 subcarriers, User 2 is allocated frequency domain resources of K2 subcarriers, User 1 transmits a second data sequence of length L1, and User 2 transmits a second data sequence of length L2.

In this example, the frequency domain resources allocated to User 1 are identical to those allocated to User 2 (K1=K2); the length of the second data sequence transmitted by User 1 is identical to that transmitted by User 2 (L1=L2); the second data sequence transmitted by User 1 occupies the same time length in the time domain as the second data sequence transmitted by User 2. As shown in FIG. 6, the second data sequence transmitted by User 1 occupies a time length t in the time domain, and the second data sequence transmitted by User 2 also occupies a time length t in the time domain. The number of data elements included in the second data sequence transmitted by User 1 is identical to that in the second data sequence transmitted by User 2. As shown in FIG. 6, the second data sequence transmitted by User 1 includes L1 data elements, and the second data sequence transmitted by User 2 includes L2 data elements (L1=L2). The ratio of the length L1 of the second data sequence transmitted by User 1 to the number K1 of subcarriers allocated to User 1 is equal to the ratio of the length L2 of the second data sequence transmitted by User 2 to the number K2 of subcarriers allocated to User 2 (L1/K1 = L2/K2).

In an embodiment, the lengths of the first data sequences corresponding to the first communication node and the second communication node are different. Here, the first communication node corresponds to the first user, and the second communication node corresponds to the second user; that is, the length of the first data sequence of the first user is different from the length of the first data sequence of the second user. When the lengths of the second data sequences of different users are identical, it can ensure that the transmission data of different users are orthogonal, thereby reducing the complexity of data processing and improving the efficiency of data processing. If, as in related technologies, different users in identical cell are configured with identical CP, then to satisfy the condition that the lengths of the second data sequences are identical, the lengths of the first data sequences of different users also need to be identical, which imposes significant limitations on spectral efficiency. In embodiments of the present disclosure, a first reference sequence is used to replace the CP, and the first reference sequences of different users may be different. Therefore, in embodiments of the present disclosure, by configuring different lengths of the first reference sequence, different users can configure different lengths of the first data sequence according to the multipath conditions of the respective channels while satisfying the condition that the lengths of the second data sequences are identical. This enables the transmission of more data when channel conditions are satisfied, thereby improving spectral efficiency.

In an embodiment, the lengths of the first data sequences corresponding to the first communication node and the second communication node are different, including at least one of the following: the time lengths occupied in the time domain by the first data sequences corresponding to the first communication node and the second communication node are different; the time domain resources occupied by the first data sequences corresponding to the first communication node and the second communication node are different; the number of data elements included in the first data sequences corresponding to the first communication node and the second communication node is different; when the frequency domain bandwidth resources allocated to the first communication node and the second communication node are identical, the number of data included in the first data sequences corresponding to the first communication node and the second communication node is different.

Here, the first communication node and the second communication node correspond to two different users, respectively. That is, the lengths of the first data sequences of the two different users are different, including at least one of the following: the different lengths of the first data sequences of the two different users mean that the time lengths occupied in the time domain by the two first data sequences are different, i.e., the occupied time domain resources are different; the different lengths of the first data sequences of the two different users mean that the number of data elements included in the two first data sequences is different; when the frequency domain bandwidth resources allocated to the two users are identical, the number of data elements included in the two first data sequences is different.

It can be understood that this embodiment describes, from the perspective of different data configurations, that the lengths of the first data sequences of two different users are different in various scenarios. In a scenario involving more than two different users, it may be that at least two of the different users satisfy the condition that the lengths of the first data sequences are not identical, or it may be that every pair of different users satisfies the condition that the lengths of the first data sequences are not identical.

In an embodiment, FIG. 7 is a schematic diagram of two different users transmitting first data sequences of different lengths according to an example of the present disclosure. As shown in FIG. 7, in this example, two different users transmit first data sequences of different lengths: User 1 transmits a first data sequence with a length of D₁, and User 2 transmits a first data sequence with a length of D₂.

The first data sequence with a length of D₁ transmitted by User 1 and the first data sequence with a length of D₂ transmitted by User 2 occupy different time lengths in the time domain. As shown in FIG. 7, the first data sequence with a length of D₁ transmitted by User 1 occupies a time length of t₁ in the time domain, and the first data sequence with a length of D₂ transmitted by User 2 occupies a time length of t₂ in the time domain.

The first data sequence with a length of D₁ transmitted by User 1 and the first data sequence with a length of D₂ transmitted by User 2 include different numbers of data elements. As shown in FIG. 7, the first data sequence with a length of D₁ transmitted by User 1 includes D₁ data elements, and the first data sequence with a length of D₂ transmitted by User 2 includes D₂ data elements (D₁≠D₂).

In an embodiment, the reference signal indication information is further used to indicate the length of the second reference sequence.

Step S120 includes: adding, by the first communication node according to the reference signal indication information, a first reference sequence to a tail of the first data sequence, and a second reference sequence to a head of the first data sequence, thereby obtaining a second data sequence.

Step S130 includes: adding, by the second communication node according to the reference signal indication information, a first reference sequence to a tail of the first data sequence, and a second reference sequence to a head of the first data sequence, thereby obtaining a second data sequence.

Here, adding the first reference sequence to the tail of the first data sequence refers to adding the first reference sequence after the first data sequence; adding the second reference sequence to the head of the first data sequence refers to adding the second reference sequence before the first data sequence.

If the second reference sequence is not added to the first data sequence, and only the first reference sequence is added after the first data sequence to form the second data sequence, then in the case that IDFT with oversampling is required, the transformed first reference sequence may be affected due to oversampling, causing identical portions of the first reference sequences of different users to no longer be identical. Therefore, by adding the second reference sequence to the first data sequence, the impact of oversampling is made to fall on the second reference sequence, ensuring that identical portions of the first reference sequences of different users remain identical after transformation and can still function as a CP.

In an embodiment, the reference signal indication information includes first reference signal indication information and second reference signal indication information. The first reference signal indication information represents the length of the first reference sequence, and the second reference signal indication information represents the length of the second reference sequence.

It can be understood that, in embodiments of the present disclosure, in a first scenario, one user corresponds to one piece of reference signal indication information, which includes first reference signal indication information and second reference signal indication information; in a second scenario, one user corresponds to two pieces of reference signal indication information, which are the first reference signal indication information and the second reference signal indication information, respectively.

Corresponding to the first scenario, step S120 includes: obtaining, by the first communication node, the first reference signal indication information and the second reference signal indication information based on the corresponding reference signal indication information; adding, by the first communication node, a first reference sequence to a tail of the first data sequence according to the first reference signal indication information, and a second reference sequence to a head of the first data sequence according to the second reference signal indication information, thereby obtaining a second data sequence. Step S130 includes: obtaining, by the second communication node, the first reference signal indication information and the second reference signal indication information based on the corresponding reference signal indication information; adding, by the second communication node, a first reference sequence to a tail of the first data sequence according to the first reference signal indication information, and a second reference sequence to a head of the first data sequence according to the second reference signal indication information, thereby obtaining a second data sequence.

Corresponding to the second scenario, step S120 includes: adding, by the first communication node, a first reference sequence to the tail of the first data sequence according to the corresponding first reference signal indication information, and a second reference sequence to a head of the first data sequence according to the second reference signal indication information, thereby obtaining a second data sequence. Step S130 includes: adding, by the second communication node, a first reference sequence to a tail of the first data sequence according to the corresponding first reference signal indication information, and a second reference sequence to a head of the first data sequence according to the second reference signal indication information, thereby obtaining a second data sequence.

In an embodiment, the lengths of the first reference sequences indicated by the respective first reference signal indication information corresponding to the first communication node and the second communication node are different, while the lengths of the second reference sequences indicated by the respective second reference signal indication information corresponding to the first communication node and the second communication node are identical.

In an embodiment, the tail of the first data sequence means a position after the first data sequence, while the head of the first data sequence means a position before the first data sequence.

In another embodiment, by configuring second reference sequences of different lengths for the first communication node and the second communication node respectively, it is possible, when the lengths of the first reference sequences are different but the lengths of the second data sequences are identical, to allow the lengths of the respective first data sequences corresponding to the first communication node and the second communication node to be either identical or different. This enables more flexible configuration of the length of the first data sequence according to the requirements of the communication nodes.

In an embodiment, the lengths of the second reference sequences corresponding to the first communication node and the second communication node are identical. Here, the first communication node corresponds to a first user, and the second communication node corresponds to a second user, meaning the length of the second reference sequence for the first user is identical to that for the second user. By having different users adopt second reference sequences of identical length, there is no need to specifically configure indication information in the downlink control signaling information to represent the lengths of the second reference sequences corresponding to different users.

It is understandable that, in various embodiments of the present disclosure, the second reference sequence also refers to a reference signal sequence. In an embodiment, it can be a ZC sequence (Zadoff-Chu sequence), a Golay sequence, a π/2 BPSK sequence, or other sequences. Here, BPSK refers to Binary Phase Shift Keying. Since the second reference sequence is known information at the receiving end, the receiving end can utilize the second reference sequence to perform operations such as phase noise tracking compensation and frequency offset estimation, thereby avoiding waste of spectrum resources.

In an embodiment, the lengths of the second reference sequences corresponding to the first communication node and the second communication node are identical, including at least one of the following: the time lengths occupied by the second reference sequences corresponding to the first communication node and the second communication node in the time domain are identical; the time domain resources occupied by the second reference sequences corresponding to the first communication node and the second communication node are identical; the number of data elements included in the second reference sequences corresponding to the first communication node and the second communication node is identical; when the frequency domain bandwidth allocated to the first communication node and the second communication node is identical, the number of data elements in the second reference sequences corresponding to the first communication node and the second communication node is identical; when the frequency domain bandwidth allocated to the first communication node and the second communication node is different, the number of data elements in the second reference sequences corresponding to the first communication node and the second communication node is identical.

Here, the first communication node and the second communication node correspond to two different users, meaning that the lengths of the second reference sequences for the two different users are identical, including at least one of the following.

The number of data elements included in the second reference sequences of the two different users is identical; the time lengths occupied by the second reference sequences of the two different users in the time domain are identical, meaning the occupied time domain resources are identical; when the frequency domain bandwidth allocated to the two different users is identical, the time lengths occupied by the two second reference sequences in the time domain are identical; whether the frequency domain bandwidth allocated to the two different users is identical or different, the number of data elements included in the two second reference sequences is identical.

In an embodiment, regardless of how the frequency domain bandwidth is allocated to different users, the exact identical second reference sequence is used. In this way, the second reference sequence can be a known term for different users, eliminating the need to specifically configure indication information in the downlink control signaling information to represent the lengths of the second reference sequences corresponding to different users.

In an embodiment, this embodiment describes scenarios where the lengths of the second reference sequences for two different users are identical under various conditions from the perspective of different data configurations. In scenarios involving more than two different users, it is possible that at least two of the different users satisfy the condition that the second reference sequences have identical length, or that every pair of different users satisfies the condition that the second reference sequences have identical length.

In an embodiment, when the frequency domain bandwidth allocated to the first communication node and the second communication node is different, the time domain length of the second reference sequence corresponding to the communication node with the larger frequency domain bandwidth is shorter than the time domain length of the second reference sequence corresponding to the communication node with the smaller frequency domain bandwidth. Here, the first communication node and the second communication node correspond to two different users, respectively. That is, when the frequency domain bandwidth allocated to the two different users is different, the time domain length of the second reference sequence inserted in the user with the larger frequency domain bandwidth is shorter than the time domain length of the second reference sequence inserted in the user with the smaller frequency domain bandwidth.

In an embodiment, the wider the frequency band, the shorter the time domain. In this case, the time domain length of the second reference sequence is shorter, and the length of the first data sequence can be longer, allowing more data to be transmitted.

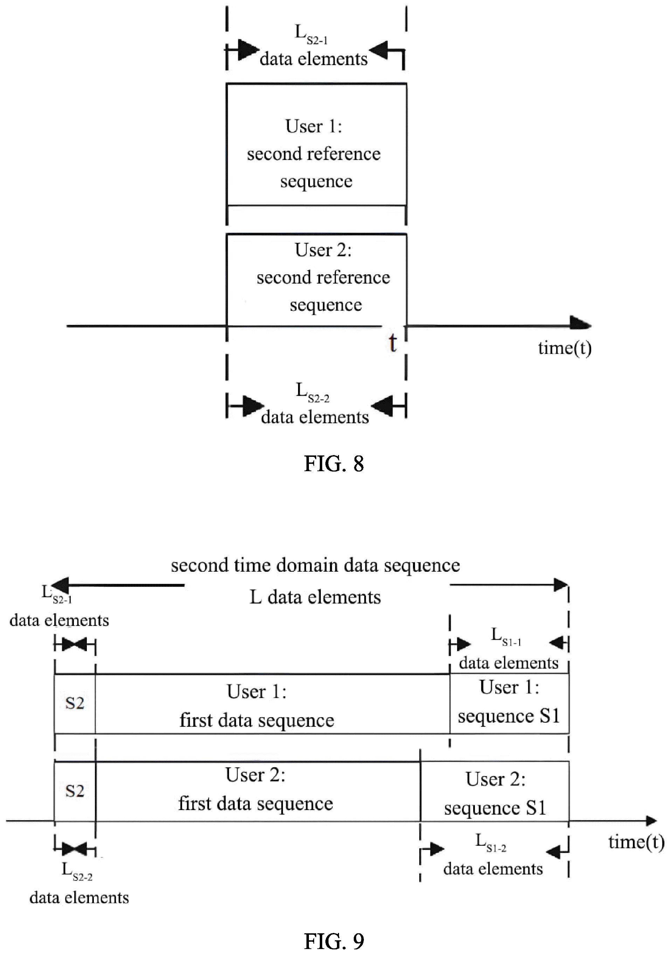

In an embodiment, FIG. 8 is a schematic diagram illustrating two different users using second reference sequences of identical length, according to an example provided in the present disclosure. As shown in FIG. 8, in this example, two different users use second reference sequences of identical length: User 1 uses a second reference sequence with a length of L_{S2-1}, and User 2 uses a second reference sequence with a length of L_{S2-2} (L_{S2-1}=L_{S2-2}).

The time length occupied in the time domain by the second reference sequence with length L_{S2-1} used by User 1 is identical to that occupied by the second reference sequence with length L_{S2-2} used by User 2. As shown in FIG. 8, the second reference sequence with length L_{S2-1} used by User 1 occupies a time length of t in the time domain, and the second reference sequence with length L_{S2-2} used by User 2 occupies a time length of t in the time domain.

The number of data included in the second reference sequence with length L_{S2-1} used by User 1 is identical to that included in the second reference sequence with length L_{S2-2} used by User 2. As shown in FIG. 8, the second reference sequence with length L_{S2-1} used by User 1 includes L_{S2-1} data elements, and the second reference sequence with length L_{S2-2} used by User 2 includes L_{S2-2} data elements(L_{S2-1}=L_{S2-2}).

In an embodiment, in other examples (not shown in the figure), the length of the second reference sequence used by User 1 and the length of the second reference sequence used by User 2 may also be different, i.e., L_{S2-1}≠L_{S2-2}.

In an embodiment, FIG. 9 is a schematic diagram illustrating two different users using second reference sequences of identical length, according to another example provided in the present disclosure. As shown in FIG. 9, two different users transmit first data sequences of different lengths, use first reference sequences S1 of different lengths, and use second reference sequences S2 of identical length, respectively as follows.

User 1 inserts a first reference sequence S1 with a length of L_{S1-1} after the transmitted first data sequence, and inserts a second reference sequence S2 with a length of L_{S2-1} before the transmitted first data sequence, forming the second data sequence transmitted by User 1;
The first reference sequence S1 with length L_{S1-1} used by User 1 includes L_{S1-1} data elements, the second reference sequence S2 with length L_{S2-1} used by User 1 includes L_{S2-1} data elements, and the second data sequence transmitted by User 1 includes L data elements;
User 2 inserts a first reference sequence S1 with a length of L_{S1-2} after the transmitted first data sequence, and inserts a second reference sequence S2 with a length of L_{S2-2} before the transmitted first data sequence, forming the second data sequence transmitted by User 2;
The first reference sequence S1 with length L_{S1-2} used by User 2 includes L_{S1-2} data elements, the second reference sequence S2 with length L_{S2-2} used by User 2 includes L_{S2-2} data elements, and the second data sequence transmitted by User 2 includes L data elements.

In this example, the number of data elements included in the first reference sequence S1 with length L_{S1-1} used by User 1 is different from the number of data elements included in the first reference sequence S1 with length L_{S1-2} used by User 2; the number of data elements included in the second reference sequence S2 with length L_{S2-1} used by User 1 is identical to the number of data elements included in the second reference sequence S2 with length L_{S2-2} used by User 2; the number of data elements included in the second data sequence transmitted by User 1 is identical to the number of data elements included in the second data sequence transmitted by User 2, i.e., L_{S1-1}≠L_{S1-2}, L_{S2-1}=L_{S2-2}.

The ratio of the number of data elements included in the first reference sequence S1 used by User 1 to the number of data elements included in the second data sequence transmitted by User 1, L_{S1-1}/L, is different from the ratio of the number of data elements included in the first reference sequence S1 used by User 2 to the number of data elements included in the second data sequence transmitted by User 2, L_{S1-2}/L, i.e., L_{S1-1}/L≠L_{S1-2}/L.

The ratio of the number of data elements included in the second reference sequence S2 used by User 1 to the number of data elements included in the second data sequence transmitted by User 1, L_{S2-1}/L, is identical to the ratio of the number of data elements included in the second reference sequence S2 used by User 2 to the number of data elements included in the second data sequence transmitted by User 2, L_{S2-2}/L, i.e., L_{S2-1}/L = L_{S2-2}/L.

In an embodiment, Step S140 includes: performing a Fourier transform (DFT) on the second data sequence to obtain an intermediate data sequence; performing an oversampled Inverse Fourier Transform (IDFT) on the intermediate data sequence to obtain a third data sequence; obtaining first information based on the third data sequence; and transmitting the first information.

Here, the intermediate data sequence refers to the intermediate process data generated after performing DFT on the second data sequence; the third data sequence refers to the data sequence obtained after performing DFT on the second data sequence followed by an oversampled IDFT, which is used for transmission.

In an embodiment, the process of performing DFT and oversampled IDFT on the second data sequence to obtain the third data sequence in this embodiment is a data processing operation performed by the first communication node and the second communication node on the respective corresponding second data sequences; when there are more than two different users in identical cell, each user performs DFT and oversampled IDFT on the second data sequence to obtain the third data sequence.

In an embodiment, the first communication node corresponds to the first user, and the second communication node corresponds to the second user. In this case, the two different users transmitting the respective second data sequence in the uplink channel includes: the two different users each perform a Fourier transform (DFT) on the respective corresponding second data sequences, then perform an oversampled Inverse Fourier Transform (IDFT) to form a third data sequence, and the two different users transmit the respective corresponding third data sequences in the uplink channel. In an embodiment, the third data sequence obtained by performing a Fourier transform on the second data sequence is the first information.

In an embodiment, the time domain length occupied by the second data sequence is identical to the time window length of the DFT. The time domain lengths occupied by the respective second data sequences corresponding to the first communication node and the second communication node are identical, and are also identical to the time window length of the DFT. Through this configuration, DFT can be performed more effectively, reducing the difficulty of data processing.

In an embodiment, the starting point of the second data sequence is identical to the starting point of the DFT time window. The starting points of the respective second data sequences corresponding to the first communication node and the second communication node are identical, and are also identical to the starting point of the DFT time window. Through this configuration, it can be ensured that the current symbols are aligned during the Fourier transform.

In an embodiment, the time domain length of the second data sequence, the time domain length of the third data sequence, and the length of the Orthogonal Frequency Division Multiplexing symbol are identical. In an embodiment, for each communication node, the time domain length of its corresponding second data sequence, the time domain length of the third data sequence, and the length of the Orthogonal Frequency Division Multiplexing symbol are identical.

In an embodiment, the time domain length of the second data sequence is equal to the interval between adjacent OFDM symbols.

**In** an embodiment, the subcarrier intervals in the frequency domain resources allocated to the first communication node and the second communication node are identical, and the time domain lengths of the respective second data sequences corresponding to the first communication node and the second communication node are identical. In an embodiment, assume that two different users transmit second time domain data sequences of identical length, specifically the second time domain data sequence transmitted by User 1 and the second time domain data sequence transmitted by User 2. In an embodiment, the second time domain data sequence in this example corresponds to the second data sequence in the present disclosure. User 1 is allocated K₁ subcarriers with a subcarrier interval of △*f*₁; User 2 is allocated K₂ subcarriers with a subcarrier interval of △*f*₂, and K₁=K₂=K, △*f*₁=△*f*₂=△*f.* The time domain length of the second time domain data sequences transmitted by User 1 and User 2 is equal to the reciprocal of the subcarrier interval in the frequency domain resources allocated to User 1 and User 2, i.e., 1/△*f*₁=1/△*f*₂=1/ △*f.*

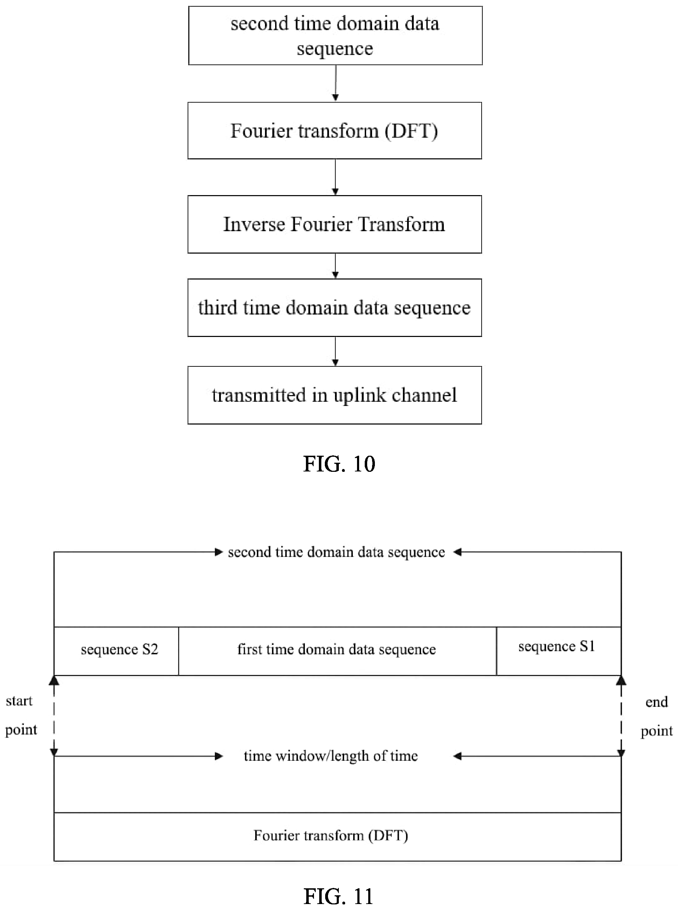

In an embodiment, FIG. 10 is a schematic flow diagram of waveform modulation for a second data sequence according to an example of the present disclosure. As shown in FIG. 10, in this example, the second data sequence is a second time domain data sequence. Taking a user as an example: perform Fourier transform (DFT) on the second time domain data sequence, and then perform Inverse Fourier Transform (IFFT) to form a third time domain data sequence, and transmit the third time domain data sequence on an uplink channel. In an embodiment, the third time domain data sequence in this example corresponds to the third data sequence in the embodiments of the present disclosure.

Here, the number of points for the Fourier transform (DFT) is the number of elements in the second time domain data sequence, and the number of points for the Inverse Fourier Transform (IFFT) is greater than the number of points for the Fourier transform (DFT). That is, zero subcarriers are added to the frequency domain data after performing Fourier transform on the second time domain data sequence, followed by an oversampling Inverse Fourier Transform (IFFT). Thus, the number of elements included in the third time domain data sequence is greater than the number of elements included in the second time domain data sequence.

For each user, the time domain length of the second data sequence is equal to the OFDM symbol length, and the time domain length of the third data sequence is also equal to the OFDM symbol length.

In an embodiment, FIG. 11 is a schematic diagram of performing DFT on a second data sequence according to an example of the present disclosure. In this example, the first data sequence corresponds to a first time domain data sequence, and the second data sequence corresponds to a second time domain data sequence. As shown in FIG. 11, the second time domain data sequence includes the first time domain data sequence, a second reference data sequence S2 added at the head of the first time domain data sequence, and a first reference data sequence S1 added at the tail of the first time domain data sequence. Perform Fourier transform (DFT) on the second time domain data sequence. The time window for the Fourier transform (DFT) is the time window of the second time domain data sequence, that is, the time length of the Fourier transform (DFT) is exactly the time length of the second time domain data sequence. The start time and end time of the Fourier transform (DFT) time window are respectively the start time and end time of the second time domain data sequence. In this example, the time windows for the Fourier transform are identical for different users.

In an embodiment, among a plurality of communication nodes, there exists at least one communication node corresponding to at least two first reference sequences of different lengths. A communication node corresponding to at least two first reference sequences of different lengths means that the communication node itself has at least two first reference sequences of different lengths, and the communication node itself has at least two first data sequences of different lengths, with the first reference sequence and the first data sequence being in one-to-one correspondence; the communication node adds the first reference sequences of different lengths after the corresponding first data sequences respectively, thereby obtaining a plurality of second data sequences of identical length. In an embodiment, a plurality of communication nodes correspond to a plurality of users, that is, among N different users, at least one user uses at least two first reference sequences of different lengths. Through the above configuration, the data to be transmitted by users can be configured more flexibly, enabling compatibility with different services or channel conditions, thereby improving spectrum utilization efficiency.

In an embodiment, both the first communication node and the second communication node need to transmit M different first data sequences. Each first data sequence is formed into a second data sequence and a third data sequence according to the data transmission method provided in the above embodiments. The M different first data sequences are sent in M OFDM symbols respectively. Here, M is a positive integer. In an embodiment, the M OFDM symbols are consecutive in the time domain.

In an embodiment, it is assumed that two different users both need to send M different first data sequences. First, the M first data sequences of two different users are formed into M second data sequences for the two different users respectively according to the data transmission method provided in the above embodiments; then, the M second data sequences of the two different users undergo the DFT and IDFT processes for the second data sequence as provided in the above embodiments respectively, forming M third data sequences for the two different users; the M third data of the two different users correspond to the M OFDM symbols to be sent by the two different users respectively. The M OFDM symbols of the two different users are consecutive in the time domain. Here, the time domain length of the second data sequences of the two different users equals the time domain length of the OFDM symbols of the two different users, and the time domain lengths of the M OFDM symbols of the two different users are equal. The time domain length of the second data sequence equals the interval between adjacent OFDM symbols.

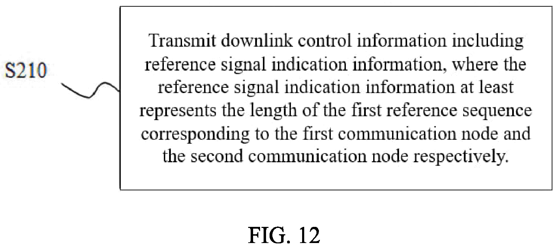

FIG. 12 is a flowchart of a data transmission method provided by another embodiment of the present disclosure. As shown in FIG. 12, the data transmission method may be applied to, but is not limited to, an upstream node, an uplink device, base Station 110 as shown in FIG. 1, or uplink communication node 210 as shown in FIG. 2. In the embodiment of FIG. 12, the data transmission method may include, but is not limited to, Step S210.

At Step S210, downlink control information including reference signal indication information is transmitted, where the reference signal indication information at least represents the length of the first reference sequence corresponding to the first communication node and the second communication node respectively;
where the reference signal indication information is used to enable the first communication node to add the first reference sequence to the tail of the first data according to the corresponding reference signal indication information to obtain a second data sequence, and to enable the second communication node to add the first reference sequence to the tail of the first data according to the corresponding reference signal indication information to obtain a second data sequence;
where the length of the first reference sequence corresponding to the first communication node and the second communication node respectively is different.

In an embodiment, this embodiment is a data transmission method performed by an uplink device/base station corresponding to the communication node. The specific implementation details and corresponding beneficial effects are identical to those of the data transmission method provided in the above embodiments, and will not be repeated here.

In an embodiment, the downlink control information includes downlink control channel information. Here, the downlink control channel information refers to information transmitted in the downlink control channel.

In an embodiment, the downlink control information is control information transmitted through downlink radio resource control signaling. Here, the downlink radio resource control signaling refers to signaling of the downlink Radio Resource Control (RRC) protocol.

In an embodiment, the reference signal indication information includes different sequence numbers. The sequence number has a one-to-one correspondence with the length of the first reference sequence corresponding to each communication node, and the sequence number is configured to represent the length of the corresponding first reference sequence. In an embodiment, the reference signal indication information may include sequence numbers 1, 2, 3, 4, 5, where sequence number 1 represents the length of the first reference sequence as a first length, sequence number 2 represents the length of the first reference sequence as a second length, sequence number 3 represents the length of the first reference sequence as a third length, sequence number 4 represents the length of the first reference sequence as a fourth length, and sequence number 5 represents the length of the first reference sequence as a fifth length.

In an embodiment, when there are I types of lengths of the first reference sequence, the reference signal indication information indicates the length of the first reference sequence corresponding to each communication node through log₂I bits. In an embodiment, if log₂I is not an integer, it is rounded up. In an embodiment, in a Quadrature Phase Shift Keying (QPSK) scenario, QPSK has four points, and the four points can be represented by two bits, which are 00, 10, 01, and 11, thereby enabling each point to have a uniquely corresponding symbol.

In an embodiment, the reference signal indication information indicates the length of the first reference sequence corresponding to each communication node through a first ratio or a second ratio;

Here, the first ratio is the ratio of the number of data elements of the first reference sequence corresponding to each communication node to the number of data elements of the first data sequence corresponding to each communication node, and the second ratio is the ratio of the number of data elements of the first reference sequence corresponding to each communication node to the number of data elements of the second data sequence.

In an embodiment, this example is an illustration of transmitting the first reference sequence S1 length information in a downlink control channel. In this embodiment, it is assumed that two different users transmit first reference sequences S1 of different lengths, specifically, User 1 transmits a first reference sequence S1 of length L_{S1-1}, and User 2 transmits a first reference sequence S1 of length L_{S1-2}.

Add indication information for two different users transmitting first reference sequences S1 of different lengths in the downlink control channel. Here, the indication information is implicit information, indicated by different sequence numbers respectively. Sequence number 1 indicates that User 1 transmits a first reference sequence S1 of length L_{S1-1}, and sequence number 2 indicates that User 2 transmits a first reference sequence S1 of length L_{S1-2}.

In other examples, the indication information may also be other types of indication information. For example, the ratio information between the number of data elements included in the first reference sequence S1 of different lengths and the number of data elements included in the first data sequence or the second data sequence.

In an embodiment, this example is an illustration of transmitting the first reference sequence S1 length information in downlink Radio Resource Control (RRC) signaling. In this example, it is assumed that the predefined first reference sequence S1 has I types of lengths, and the length of the first reference sequence S1 is indicated in the downlink Radio Resource Control (RRC) signaling through a certain number of bits.

Assuming the first reference sequence S1 has 4 types of lengths, then the length of the first reference sequence S1 is indicated through 2-bit information (log₂4=2), specifically: bits 00 indicate the length of the first reference sequence S1 is L_{S1-1}, bits 01 indicate the length of the first reference sequence S1 is L_{S1-2}, bits 10 indicate the length of the first reference sequence S1 is L_{S1-3}, bits 11 indicate the length of the first reference sequence S1 is L_{S1-4}, L_{S1-1}≠L_{S1-2}≠L_{S1-3}≠L_{S1-4}.

In an embodiment, the present disclosure further provides a data transmission method, applied to a transmitting node. In an embodiment, the transmitting node may be a base station, an uplink control node device, or the base Station 110 in the communication system as shown in FIG. 1, or the uplink communication node 210 as shown in FIG. 2. This data transmission method includes, but is not limited to, the following steps: transmitting, by the transmitting node, downlink control information including reference signal indication information, where the reference signal indication information at least represents the lengths of the first reference sequences corresponding to the first communication node and the second communication node, respectively; receiving, by the transmitting node, the first information respectively transmitted by the first communication node and the second communication node, where each piece of first information is obtained based on the respective second data sequences of the first communication node and the second communication node; where the second data sequence corresponding to the first communication node is obtained by the first communication node adding the first reference sequence to a tail of the first data according to the reference signal indication information; the second data sequence corresponding to the second communication node is obtained by the second communication node adding the first reference sequence to a tail of the first data according to the reference signal indication information; and the lengths of the first reference sequences corresponding to the first communication node and the second communication node are different.

It should be noted that the specific implementation details and beneficial effects of the data transmission method in this embodiment can be determined from the corresponding sections in the above embodiments and will not be repeated here.

The data transmission method of the present disclosure will be described comprehensively and specifically through two examples below. In an embodiment, the following embodiments are provided to better illustrate the data transmission method of the present disclosure exemplarily and are not intended to be specifically limited.

### Example 1:

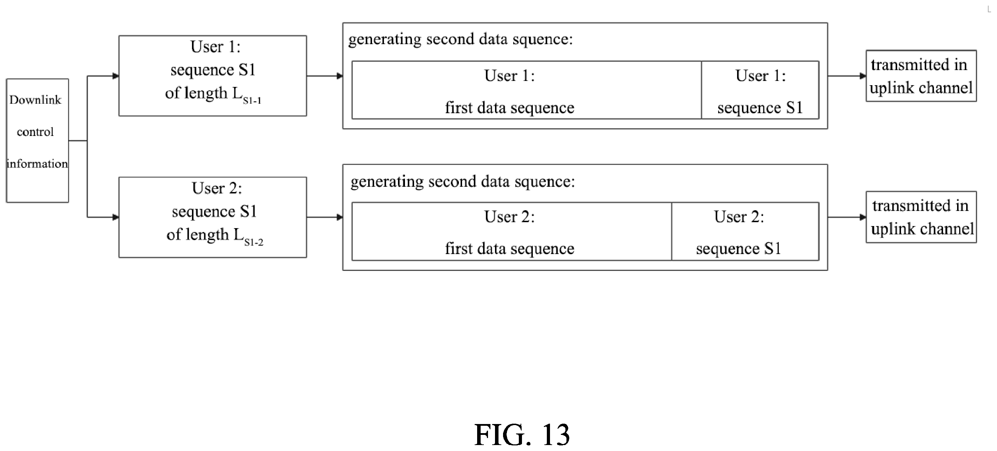

FIG. 13 is a schematic diagram according to an example of the present disclosure, showing two different users transmitting data sequences of different lengths and keeping orthogonal to each other. As shown in FIG. 13, two different users transmit first data sequences of different lengths, specifically: User 1 transmits a first data sequence, and User 2 transmits a first data sequence. The length of the first data sequence transmitted by User 1 is different from the length of the first data sequence transmitted by User 2.

By indicating in the downlink control information that User 1 and User 2 use first reference sequences S1 of different lengths, respectively. User 1 uses a first reference sequence S1 of length L_{S1-1}, and User 2 uses a first reference sequence S1 of length L_{S1-2}. The first reference sequence S1 of length L_{S1-1} is inserted after the first data sequence transmitted by User 1 to form a second data sequence transmitted by User 1. The first reference sequence S1 of length L_{S1-2} is inserted after the first data sequence transmitted by User 2 to form a second data sequence transmitted by User 2. The length of the second data sequence transmitted by User 1 is equal to the length of the second data sequence transmitted by User 2.

The second data sequence transmitted by User 1 and the second data sequence transmitted by User 2 are transmitted in the uplink channel, respectively.

### Example 2:

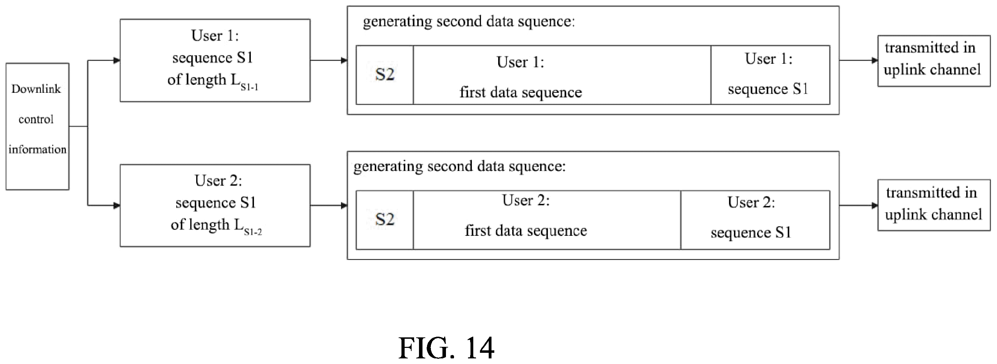

FIG. 14 is a schematic diagram provided by another example of the present disclosure, showing two different users transmitting data sequences of different lengths and keeping orthogonal to each other. As shown in FIG. 14, two different users transmit first data sequences of different lengths, specifically: User 1 transmits a first data sequence, and User 2 transmits a first data sequence. The length of the first data sequence transmitted by User 1 is different from the length of the first data sequence transmitted by User 2.

The downlink control information indicates that User 1 and User 2 use first reference sequences S1 of different lengths, respectively: User 1 uses a first reference sequence S1 of length L_{S1-1}, and User 2 uses a first reference sequence S1 of length L_{S1-2}.

The first reference sequence S1 of length L_{S1-1} is inserted after the first data sequence transmitted by User 1, and a second reference sequence S2 is inserted before the first data sequence transmitted by User 1 to form the second data sequence transmitted by User 1.

The first reference sequence S1 of length L_{S1-2} is inserted after the first data sequence transmitted by User 2, and a second reference sequence S2 is inserted before the second data sequence transmitted by User 1 to form the second data sequence transmitted by User 2.

In this example, the length of the second reference sequence S2 inserted before the second data sequence transmitted by User 1 is identical to the length of the second reference sequence S2 inserted before the second data sequence transmitted by User 2. In other examples, the length of the second reference sequence S2 inserted before the second data sequence transmitted by User 1 may also be different from the length of the second reference sequence S2 inserted before the second data sequence transmitted by User 2. The length of the second reference sequence S2 inserted before the second data sequence transmitted by two different users is related to the frequency domain bandwidth allocated to the two different users. In an embodiment, the larger the frequency domain bandwidth of a user, the shorter the length of the inserted second reference sequence S2, and the longer the first data sequence that can be carried.

It is understandable that the specific implementation details and corresponding beneficial effects of the above examples can all be correspondingly obtained in the embodiments of the present disclosure, and will not be repeated here.

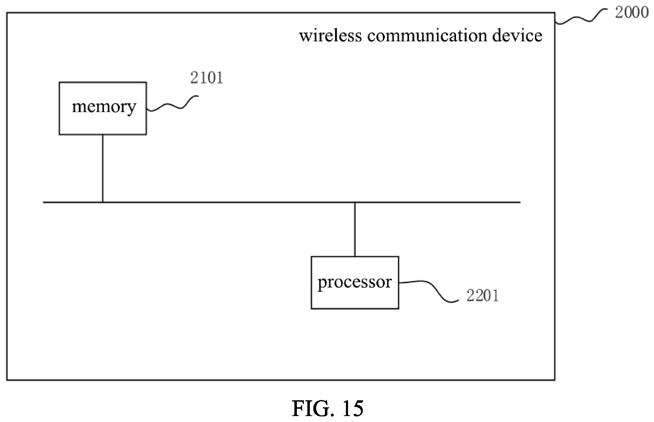

FIG. 15 is a schematic structural diagram of a wireless communication device provided by an embodiment of the present disclosure. As shown in FIG. 15, the wireless communication device 2000 includes a memory 2100 and a processor 2200. The wireless communication device 2000 may include at least one memory 2100 and at least one processor 2200. In FIG. 15, one memory 2101 and one processor 2201 are taken as examples. The memory 2101 and processor 2201 in the network device may be connected through a bus or other means, and in FIG. 15, connection through a bus is taken as an example.

The memory 2101, as a computer-readable storage medium, can be configured to store software programs, computer-executable programs, and modules, such as the program instructions/modules corresponding to the method provided by any embodiment of the present disclosure. The processor 2201 executes the software programs, instructions, and modules stored in the memory 2101 to implement the data transmission method provided by any of the above embodiments.

The memory 2101 may mainly include a program storage area and a data storage area. The program storage area may store an operating system and applications required for at least one function. Furthermore, the memory 2101 may include high-speed random-access memory and may also include non-volatile memory, such as at least one magnetic disk storage device, flash memory device, or other non-volatile solidstate storage device. In some instances, the memory 2101 further includes memory remotely set relative to the processor 2201, and these remote memories may be connected to the device through a network. Examples of the aforementioned network include, but are not limited to, the Internet, intranets, local area networks, mobile communication networks, and combinations thereof.

An embodiment of the present disclosure further provides a computer-readable storage medium storing computer-executable instructions, which are configured to execute the data transmission method provided by any embodiment of the present disclosure.

An embodiment of the present disclosure further provides a computer program product, including a computer program or computer instructions. The computer program or computer instructions are stored in a computer-readable storage medium, a processor of a computer device reads the computer program or computer instructions from the computer-readable storage medium, and the processor executes the computer program or computer instructions, causing the computer device to execute the data transmission method provided by any embodiment of the present disclosure.

The system architecture and application scenarios described in the embodiments of the present disclosure are intended to illustrate the technical scheme of the embodiments of the present disclosure more clearly and do not constitute limitations on the technical scheme provided by the embodiments of the present disclosure. Those having ordinary skill in the art will appreciate that, with the evolution of system architectures and the emergence of new application scenarios, the technical scheme provided by the embodiments of the present disclosure is equally applicable to similar technical problems.

Those having ordinary skill in the art may understand that all or some of the steps, systems, and functional modules/units in the devices disclosed above can be implemented as software, firmware, hardware, and appropriate combinations thereof.

In hardware implementations, the division between functional modules/units mentioned in the above description does not necessarily correspond to the division of physical components; for example, one physical component may have multiple functions, or one function or step may be executed through the cooperation of several physical components. Some or all of the physical components may be implemented as software executed by a processor, such as a central processing unit, digital signal processor, or microprocessor, or as hardware, or as an integrated circuit, such as an application-specific integrated circuit. Such software may be distributed on computer-readable media, which may include computer storage media (or non-transitory media) and communication media (or transitory media). As is well known to those of ordinary skill in the art, the term "computer storage media" includes volatile and non-volatile, removable and non-removable media implemented in any method or technology for storing information, such as computer-readable instructions, data structures, program modules, or other data. Computer storage media include, but are not limited to, RAM, ROM, EEPROM, flash memory or other memory technology, CD-ROM, digital versatile disc (DVD) or other optical storage, magnetic cassettes, magnetic tape, magnetic disk storage or other magnetic storage devices, or any other medium that can be configured to store desired information and can be accessed by a computer. Furthermore, it is well known to those of ordinary skill in the art that communication media typically embody computer-readable instructions, data structures, program modules, or other data in a modulated data signal such as a carrier wave or other transmission mechanism, and can include any information delivery media.

The terms "component," "module," "system," and the like used in this specification refer to computerrelated entities, hardware, firmware, combinations of hardware and software, software, or software in execution. For example, a component may be, but is not limited to, a process running on a processor, a processor, an object, an executable file, an execution thread, a program, or a computer. By way of illustration, both an application running on a computing device and the computing device itself can be components. One or more components may reside within a process or execution thread, and a component may be located on one computer or distributed across two or more computers. Furthermore, these components may execute from various computer-readable media on which various data structures are stored. Components may communicate, for example, through local or remote processes based on signals with one or more data packets (e.g., data from one component interacting with another component within a local system, a distributed system, or a network, such as the Internet interacting with other systems through signals).

The above descriptions illustrate some embodiments of the present disclosure with reference to the accompanying drawings, which are not intended to limit the scope of rights of the present disclosure. Any modifications, equivalent substitutions, and improvements made by those having ordinary skill in the art without departing from the scope and essence of the present disclosure shall fall within the scope of rights of the present disclosure.

## Claims

1. A data transmission method, which is applied to a first communication node and a second communication node, the method comprising:
receiving, by the first communication node and the second communication node, downlink control information comprising reference signal indication information, wherein the reference signal indication information represents a length of a first reference sequence corresponding to each of the first communication node and the second communication node;
adding a first reference sequence, by the first communication node, to a tail of a first data sequence according to the reference signal indication information, to obtain a second data sequence;
adding a first reference sequence, by the second communication node, to a tail of a first data sequence according to the reference signal indication information, to obtain a second data sequence;
wherein, the length of the first reference sequence corresponding to the first communication node and the length of the first reference sequence corresponding to the second communication node are different; and
transmitting first information, by the first communication node and the second communication node, respectively, wherein each piece of the first information is obtained according to the corresponding second data sequence.

2. The data transmission method according to claim 1, wherein:
the lengths of the second data sequences corresponding to the first communication node and the second communication node are identical.

3. The data transmission method according to claim 2, wherein:
the lengths of the first data sequences corresponding to the first communication node and the second communication node are different.

4. The data transmission method according to any one of claims 1 to 3, wherein:
the reference signal indication information is further configured to indicate a length of a second reference sequence;
adding the first reference sequence, by the first communication node, to the tail of the first data sequence according to the reference signal indication information, to obtain a second data sequence, comprising:
adding, by the first communication node according to the reference signal indication information, the first reference sequence to the tail of the first data sequence, and the second reference sequence to the head of the first data sequence, to obtain the second data sequence; and
adding the first reference sequence, by the second communication node, to the tail of the first data sequence according to the reference signal indication information, to obtain the second data sequence, comprising:
adding, by the second communication node according to the reference signal indication information, the first reference sequence to the tail of the first data sequence, and the second reference sequence to the head of the first data sequence, to obtain the second data sequence.

5. The data transmission method according to claim 1, wherein the difference in length between the first reference sequence corresponding to the first communication node and the first reference sequence corresponding to the second communication node comprises at least one of:
time lengths occupied in a time domain by the first reference sequences respectively corresponding to the first communication node and the second communication node are different;
time domain resources occupied by the first reference sequences respectively corresponding to the first communication node and the second communication node are different;
numbers of data elements contained in the first reference sequences respectively corresponding to the first communication node and the second communication node are different; and
a ratio of the number of data elements of the first reference sequence corresponding to the first communication node to a number of data elements of the second data sequence corresponding to the first communication node is different from a ratio of a number of data elements of the first reference sequence corresponding to the second communication node to a number of data elements of the second data sequence corresponding to the second communication node.

6. The data transmission method according to claim 3, wherein the difference in length between the first data sequences respectively corresponding to the first communication node and the second communication node comprises at least one of:
time lengths occupied in a time domain by the first data sequences respectively corresponding to the first communication node and the second communication node are different;
time domain resources occupied by the first data sequences respectively corresponding to the first communication node and the second communication node are different;
numbers of data elements contained in the first data sequences respectively corresponding to the first communication node and the second communication node are different; or
in response to frequency domain bandwidth resources allocated to the first communication node and the second communication node being identical, numbers of data elements contained in the first data sequences respectively corresponding to the first communication node and the second communication node are different.

7. The data transmission method according to claim 2, wherein the lengths of the second data sequences corresponding to the first communication node and the second communication node being identical, comprises at least one of:
time lengths occupied in a time domain by the second data sequences respectively corresponding to the first communication node and the second communication node are identical;
time domain resources occupied by the second data sequences respectively corresponding to the first communication node and the second communication node are identical;
numbers of data elements contained in the second data sequences respectively corresponding to the first communication node and the second communication node are identical; or
a ratio of the number of data elements in the second data sequence corresponding to the first communication node to a number of subcarriers contained in a frequency domain resource corresponding to the first communication node is identical to a ratio of the number of data elements in the second data sequence corresponding to the second communication node to a number of subcarriers contained in a frequency domain resource corresponding to the second communication node.

8. The data transmission method according to claim 4, wherein:
the lengths of the second reference sequences respectively corresponding to the first communication node and the second communication node are identical.

9. The data transmission method according to claim 4, wherein the lengths of the second reference sequences respectively corresponding to the first communication node and the second communication node being identical, comprises at least one of:
time lengths occupied in a time domain by the second reference sequences respectively corresponding to the first communication node and the second communication node are identical;
time domain resources occupied by the second reference sequences respectively corresponding to the first communication node and the second communication node are identical;
numbers of data elements contained in the second reference sequences respectively corresponding to the first communication node and the second communication node are identical; or
in response to frequency domain bandwidths respectively allocated to the first communication node and the second communication node being identical, numbers of data elements in the second reference sequences respectively corresponding to the first communication node and the second communication node are identical.

10. The data transmission method according to claim 4, wherein, in response to frequency domain bandwidths allocated to the first communication node and the second communication node being different, a time domain length of the second reference sequence corresponding to a communication node with a large frequency domain bandwidth is less than the time domain length of the second reference sequence corresponding to a communication node with a small frequency domain bandwidth.

11. The data transmission method according to claim 1, wherein transmitting first information, by the first communication node and the second communication node respectively further comprises:
performing a Fourier transform (DFT) on the second data sequence to obtain an intermediate data sequence;
performing an oversampled inverse Fourier transform (IDFT) on the intermediate data sequence to obtain a third data sequence;
obtaining the first information based on the third data sequence; and
transmitting the first information.

12. The data transmission method according to claim 11, wherein:
a time domain length occupied by the second data sequence is identical to a time window length of the DFT.

13. The data transmission method according to claim 11, wherein:
a starting point of the second data sequence is identical to a starting point of a time window of the DFT.

14. The data transmission method according to claim 11, wherein:
a time domain length of the second data sequence, a time domain length of the third data sequence, and a length of the Orthogonal Frequency Division Multiplexing symbol are identical.

15. The data transmission method according to claim 1, wherein:
at least one communication node among a plurality of the communication nodes corresponds to first reference sequences of at least two different lengths.

16. A data transmission method comprising:
transmitting downlink control information comprising reference signal indication information, wherein the reference signal indication information at least represents the lengths of first reference sequences corresponding to a first communication node and a second communication node respectively;
wherein the reference signal indication information is configured to enable the first communication node to add a first reference sequence to a tail of first data according to the corresponding reference signal indication information to obtain a second data sequence, and to enable the second communication node to add a first reference sequence to a tail of first data according to the corresponding reference signal indication information to obtain a second data sequence; and
wherein the lengths of the first reference sequences respectively corresponding to the first communication node and the second communication node are different.

17. The data transmission method according to claim 16, wherein the downlink control information is downlink control channel information.

18. The data transmission method according to claim 16, wherein the downlink control information is control information transmitted through downlink radio resource control signaling.

19. The data transmission method according to any one of claims 16 to 18, wherein the reference signal indication information is of different sequence numbers, wherein the sequence numbers correspond one-to-one with the lengths of the first reference sequences corresponding to each communication node, and the sequence numbers are configured to represent the lengths of the corresponding first reference sequences.

20. The data transmission method according to any one of claims 16 to 18, wherein in response to the first reference sequences having I types of lengths, the reference signal indication information indicates the lengths of the first reference sequences corresponding to each communication node through log₂I bits.

21. The data transmission method according to any one of claims 16 to 18, wherein the reference signal indication information indicates the lengths of the first reference sequences corresponding to each communication node through a first ratio or a second ratio;
wherein, the first ratio is a ratio of a number of data elements of the first reference sequence corresponding to each communication node to a number of data of the first data sequence corresponding to the communication node, and the second ratio is a ratio of a number of data elements of the first reference sequence corresponding to the communication node to a number of data elements of the second data sequence.

22. A data transmission method, which is applied to a transmitting node, the method comprising:
transmitting, by the transmitting node, downlink control information comprising reference signal indication information, wherein the reference signal indication information at least represents lengths of first reference sequences corresponding to a first communication node and a second communication node, respectively;
receiving, by the transmitting node, first information respectively transmitted by the first communication node and the second communication node, wherein each piece of the first information is obtained based on second data sequences corresponding to the first communication node and the second communication node, respectively;
wherein the second data sequence corresponding to the first communication node is obtained by the first communication node adding a first reference sequence to a tail of first data according to the corresponding reference signal indication information;
wherein the second data sequence corresponding to the second communication node is obtained by the second communication node adding a first reference sequence to a tail of first data according to the corresponding reference signal indication information; and
wherein the lengths of the first reference sequences corresponding to the first communication node and the second communication node are different.

23. A wireless communication device, comprising:
at least one processor;
at least one memory, configured to store at least one program;
when the at least one program is executed by the at least one processor, the method according to any one of claims 1 to 22 is implemented.

24. A computer-readable storage medium storing computer-executable instructions, and the computer-executable instructions are configured to execute the method according to any one of claims 1 to 22.

25. A computer program product, comprising a computer program or computer instructions, wherein the computer program or the computer instructions are stored in a computer-readable storage medium, a processor of a computer device is configured to read the computer program or the computer instructions from the computer-readable storage medium, and execute the computer program or the computer instructions, such that the computer device performs the method according to any one of claims 1 to 22.
